# EUROPÄISCHE PATENTSCHRIFT

(11) **EP 3 334 612 B1**
(45) Veröffentlichungstag und Bekanntmachung des Hinweises auf die Patenterteilung: **10.07.2019**
(21) Anmeldenummer: 16724906.9
(22) Anmeldetag: 26.05.2016
(51) Int. Cl.: B60C 11/04, B60C 11/03, B60C 11/13

(54) **FAHRZEUGLUFTREIFEN**
PNEUMATIC VEHICLE TYRES
PNEUMATIQUE DE VÉHICULE

(30) Priorität: 13.08.2015 DE 102015215455
(43) Veröffentlichungstag der Anmeldung: 20.06.2018
(73) Patentinhaber: Continental Reifen Deutschland GmbH, 30165 Hannover (DE)
(72) Erfinder: DARIES, Ronald, 28277 Charlotte, NC (US)
(74) Vertreter: Finger, Karsten
(86) Internationale Anmeldenummer: PCT/EP2016/061868
(87) Internationale Veröffentlichungsnummer: WO 2017/025212

(56) Entgegenhaltungen:
- EP-A1- 2 570 272
- WO-A1-2015/086624
- US-A- 2 322 505
- US-A1- 2013 284 335

## Beschreibung

Die Erfindung betrifft einen Fahrzeugluftreifen für Nutzfahrzeuge mit einem profilierten Laufstreifen mit wenigstens zwei in axialer Richtung A benachbarten Umfangsrippen, welche durch eine Umfangsrille der in radialer Richtung R gemessenen Tiefe H getrennt sind, bei dem die Umfangsrille in axialer Richtung A durch zwei Rillenwände begrenzt wird, bei dem die Umfangsrippen in radialer Richtung R nach außen durch eine die Straßenkontaktfläche bildende radial äußere Oberfläche und in axialer Richtung zur Umfangsrille hin jeweils durch eine Flanke, welche die eine zur Umfangsrippe gerichtete Rillenwand der Umfangsrille bildet, begrenzt werden und bei dem die Umfangsrille aus einem radial inneren Erstreckungsabschnitt der in radialer Richtung gemessenen Höhe H₁ und einem radial daran anschließenden radial äußeren Erstreckungsabschnitt der Höhe H₂ ausgebildet ist, wobei die Umfangsrille im radial inneren Erstreckungsabschnitt als über den gesamten Umfang des Reifens erstreckter Kanal der Höhe H₁ und der in axialer Richtung gemessenen Breite B₁ ausgebildet ist, wobei die Umfangsrille im radial äußeren Erstreckungsabschnitt längs ihrer Erstreckung in Umfangsrichtung U über den Umfang hinweg mit in alternierender Abfolge angeordneten ersten Umfangsbereichen und zweiten Umfangsbereichen ausgebildet ist, wobei der radial äußere Erstreckungsabschnitt der Umfangsrille in den zweiten Umfangsbereichen mit einer maximalen Breite B₃ mit B₃≥B₁ und in den ersten Umfangsbereichen längs ihrer Erstreckung in Umfangsrichtung mit einer Breite B₂ mit B₂ < B₁ ausgebildet ist.

Derartige Fahrzeugluftreifen sind bekannt.

Es ist bekannt, Nutzfahrzeugreifen mit Umfangsrippen auszubilden, welche in axialer Richtung des Reifens durch Umfangsrillen voneinander getrennt sind. Die Umfangsrillen haben dabei üblicher Weise über den gesamten Umfang des Reifens hinweg jeweils in den Querschnittflächen, welche die Reifenachse beinhalten, eine von radial innen nach radial außen V-förmig erweiterte Querschnittkontur mit längs der gesamten radialen Erstreckung geradlinigen Rillenwänden. Diese üblichen Rillen ermöglichen zwar mit ihrem hohen Profilnegativanteil, den sie im Profil erzeugen, eine große Aufnahmekapazität und Ableitungsfähigkeit von Wasser. Allerdings wirkt sich dieser hohe negative Anteil auch negativ auf den Rollwiderstand derartiger Nutzfahrzeugreifen aus. In axialer Richtung werden zwar Griffkanten durch die Rillenwände geschaffen sind, jedoch keine in Umfangsrichtung. Der Griff auf schneebedeckter Straße ist hier eingeschränkt.

Gelegentlich wurde vorgeschlagen, die Umfangsrillen über den gesamten Umfang des Fahrzeugluftreifens hinweg in den Querschnittebenen, welche jeweils die Reifenachse beinhalten, aus einem radial inneren Erstreckungsabschnitt und einem radial äußeren Erstreckungsabschnitt auszubilden, wobei der radial innere Erstreckungsabschnitt als über den Umfang des Reifens erstreckter Kanal mit über den gesamten Umfang gleichbleibender Kanalbreite ausgebildet ist und wobei der radial äußere Erstreckungsabschnitt als schmale Umfangsrille, die längs der gesamten Erstreckung über den Umfang hinweg mit einer Rillenbreite ausgebildet ist, die schmaler ist als die Kanalbreite. Diese Ausbildung ermöglicht den Abfluss von in das Profil eingedrungenem Wasser durch den breiten Kanal unterhalb des radial äußeren Erstreckungsabschnitts. Dabei bildet der radial äußere Erstreckungsabschnitt aufgrund seiner geringeren Rillenbreite gegenüber den herkömmlichen Rillen einen geringeren Profilnegativanteil, wodurch der Rollwiderstand etwas verbessert werden kann. Allerdings können sich diese Rillen beim Durchlaufen des Reifenlatsches beim Abrollen während des Fahrens in ihrem radial äußeren als schmale Rille ausgebildeten Erstreckungsabschnitt leicht schließen, wodurch ein Eindringen von Wasser behindert wird. Die Nässeeigenschaften des Reifens werden hierdurch wieder beeinträchtigt. Darüber hinaus wird durch das beim Abrollen im Latsch jeweils immer wiederkehrende Schließen der Rille die Aufnahme und das Eindringen von Steinen in die Rille begünstigt und ein Auswerfen von eingedrungenen Steinen erschwert. Durch das Schließen der Rille über den Umfang hinweg entfallen jegliche Griffkanten, wodurch der Griff auf schneebedeckten Straßen beschränkt ist.

Aus der US 2,322,505 ist es bekannt, Fahrzeugluftreifen mit Laufstreifenprofil gemäß den Merkmalen des Oberbegriffs von Anspruch 1 auszubilden. Bei diesem bekanten Fahrzeugluftreifen wird ermöglicht, dass auch beim Durchlaufen des Reifenlatsches Wasser durch die breit ausgebildeten Umfangserstreckungsabschnitte des radial äußeren Erstreckungsabschnittes in den Kanal eindringen und in das Profil eingedrungene Steine durch die breiten Umfangserstreckungsabschnitte leichter aus dem Laufstreifenprofil herausgeschleudert werden können. Allerdings kann die Umfangsrille im Erstreckungsbereich der ersten Umfangsbereiche in denen Sie schmal ausgebildet ist, beim Durchlaufen des Latsches immer noch leicht schließen, so dass das Eindringen von Wasser und das Abführen von Wasser über den Umfang des Reifens hinweg immer noch stark behindert wird. Beim Befahren von schneebedeckten Fahrbahnen wird durch das Schließen der Rillen im Bereich des Reifenlatsches eine scheinbar glatte Oberfläche ohne weitere Griffkanten gebildet. Auch dieser Reifen ist hinsichtlich seiner Nassgriffeigenschaften und hinsichtlich seiner Schneegriffeigenschaften somit immer noch beschränkt.

Bei der aus diesem Dokument bekannten Ausbildung ist die Umfangsrille im äußeren Erstreckungsbereich aufgrund des ringförmigen Kanals mit seiner großen Breite in den schmalen Erstreckungsabschnitten der Rille im radial äußeren Erstreckungsabschnitt mit reduzierter radialer Steifigkeit ausgebildet, die es ermöglicht, dass bei Aufbau eines großen Wasserdruckes beim Durchlaufen des Latsches aufgrund des Wasserdruckes aufgedrückt wird. Dies wirkt sich negativ auf den Rollwiderstand aus und ermöglicht wiederum ein Eindringen von Steinen in den schmalen Erstreckungsabschnitt der Rille.

**Aus der** WO 2015/086624 A1 **ist es bekannt, eine Querrille eines Reifens radial innen aus einem Kanal und radial außerhalb dieses Kanals längs der gesamten radialen Erstreckung bis zur radial äußeren Oberfläche hin stetig erweitert auszubilden.**

Der Erfindung liegt die Aufgabe zugrunde, einen Fahrzeugluftreifen für Nutzfahrzeugreifen zu ermöglichen, bei dem ein verbesserter Rollwiderstand bei verbesserten Nässeeigenschaften und gutem Steinfangverhalten ermöglicht wird.

Die Aufgabe wird erfindungsgemäß durch die Ausbildung eines Fahrzeugluftreifens für Nutzfahrzeuge mit einem profilierten Laufstreifen mit wenigstens zwei in axialer Richtung A benachbarten Umfangsrippen, welche durch eine Umfangsrille der in radialer Richtung R gemessenen Tiefe H getrennt sind, bei dem die Umfangsrille in axialer Richtung A durch zwei Rillenwände begrenzt wird, bei dem die Umfangsrippen in radialer Richtung R nach außen durch eine die Straßenkontaktfläche bildende radial äußere Oberfläche und in axialer Richtung zur Umfangsrille hin jeweils durch eine Flanke, welche die eine zur Umfangsrippe gerichtete Rillenwand der Umfangsrille bildet, begrenzt werden und bei dem die Umfangsrille aus einem radial inneren Erstreckungsabschnitt der in radialer Richtung gemessenen Höhe H₁ und einem radial daran anschließenden radial äußeren Erstreckungsabschnitt der Höhe H₂ ausgebildet ist, wobei die Umfangsrille im radial inneren Erstreckungsabschnitt als über den gesamten Umfang des Reifens erstreckter Kanal der Höhe H₁ und der in axialer Richtung gemessenen Breite B₁ ausgebildet ist, wobei die Umfangsrille im radial äußeren Erstreckungsabschnitt längs ihrer Erstreckung in Umfangsrichtung U über den Umfang hinweg mit in alternierender Abfolge angeordneten ersten Umfangsbereichen und zweiten Umfangsbereichen ausgebildet ist, wobei der radial äußere Erstreckungsabschnitt der Umfangsrille in den zweiten Umfangsbereichen mit einer maximalen Breite B₃ mit B₃≥B₁ und in den ersten Umfangsbereichen längs ihrer Erstreckung in Umfangsrichtung mit einer Breite B₂ mit B₂ < B₁ ausgebildet ist, gemäß den Merkmalen von Anspruch 1 gelöst, bei dem die beiden die Rillenwände bildenden Flanken in den ersten Umfangsbereichen im Übergang zur radial äußeren Oberfläche zur Umfangsrippe jeweils mit einer Fase der in radialer Richtung R gemessenen Höhe H₄ mit H₄< H₂ und längs ihrer radialen Erstreckung im radial äußeren Erstreckungsabschnitt von radial innen nach radial außen bis zur Fase im Abstand B₂ von einander ausgebildet sind.

Durch diese Ausbildung wird in der radial äußeren Oberfläche ein geringer Negativanteil bei großem Aufnahme- und Ableitevolumen des Wassers ermöglicht. Somit kann die rollwiderstandsbegünstigende Ausbildung des geringen Negativanteils bei großem Wasseraufnahmevolumen genutzt werden. Darüber hinaus wird durch diese Ausbildung ermöglicht, dass beim Durchlaufen des Latsches beim Abrollen Wasser durch die breit ausgebildeten zweiten Umfangsbereiche gut ein- und ausfließen kann und auch aufgenommene Steine einfacher ausgeschleudert werden können. Dabei hinaus wird beim Durchlaufen des Reifenlatsches im ersten Umfangsbereich auch beim Schließen der Rille durch die Ausbildung der beiden Rillenwände mit Fase zwischen der Straße und den beiden Fasen ein weiterer Durchflusskanal offen gehalten, durch den Wasser aufgenommen und weitergeleitet werden kann. Einem Aufbau von hohem Wasserdruck kann somit entgegengewirkt werden. Die Möglichkeit des Öffnens oder teilweise Öffnens des im Reifenlatsch geschlossenen Umfangsabschnitts aufgrund hohen Wasserdrucks wird somit reduziert. Dies wirkt sich positiv auf einen geringen Rollwiderstand aus. Ein Eindringen von Steinen in die ersten Umfangsbereiche beim Durchlaufen des Reifenlatsches wird hierdurch ebenfalls erschwert. Zusätzlich werden trotz Schließens der ersten Erstreckungsbereiche beim Durchlaufen des Latsches aufgrund der Fasen Kanten zur verbesserten Griffwirkung auf Schnee und Nässe bereitgestellt.

Besonders vorteilhaft ist die Ausbildung eines Fahrzeugreifens gemäß den Merkmalen von Anspruch 2, wobei die Breite B₂ mit 2,5mm ≤ B₂ ≤ 3mm ausgebildet ist. Hierdurch kann in einfacher Weise eine besonders Wasseraufnahme im ersten Umfangsabschnitt außerhalb des Reifenlatsches bei zuverlässigem Schließen des ersten Umfangsabschnitts im Reifenlatsch und somit trotz besonders guter Wasseraufnahme ein besonders günstiger Rollwiderstand umgesetzt werden.

Besonders vorteilhaft ist die Ausbildung eines Fahrzeugreifens gemäß den Merkmalen von Anspruch 3, wobei die Breite B₁ mit 5mm ≤ B₁ ≤ 10mm und die Höhe H₁ mit (1/3)H ≤ H₁ ≤ (2/3)H ausgebildet ist. Hierdurch kann in einfacher Weise trotz geringem, für einen geringeren Rollwiderstand erwünschtem Profilnegativanteil (Void) ein ausreichend großer, wirksamer Kanal für die Wasserableitung bereitgestellt werden ohne für guten Rollwiderstand unerwünschtes Einbiegen des radial äußeren Erstreckungsabschnitts der ersten Umfangserstreckungsbereiche beim Schließen der Rille beim Durchlaufen des Reifenlatsches.

Besonders vorteilhaft ist die Ausbildung eines Fahrzeugreifens gemäß den Merkmalen von Anspruch 4, wobei die Breite B₃ mit B₃ ≤ 17mm ausgebildet ist. Hierdurch kann der Negativanteil des Profiles zusätzlich beschränkt und somit ein guter Rollwiderstand weiter begünstigt werden.

Besonders vorteilhaft ist die Ausbildung eines Fahrzeugreifens gemäß den Merkmalen von Anspruch 5, wobei die Höhe H₂ mit (1/3)H ≤ H₂ ≤ (2/3)H ausgebildet ist. Hierdurch kann i einfacher Weise eine hohe Stützwirkung des im Reifenlatsch geschlossenen ersten Umfangsbereiches ermöglicht und somit einem unerwünschten zuverlässig entgegengewirkt werden. Hierdurch wird ein guter Rollwiderstand weiter begünstigt.

Besonders vorteilhaft ist die Ausbildung eines Fahrzeugreifens gemäß den Merkmalen von Anspruch 6, wobei die Höhe H mit 8mm ≤ H₁ ≤ 18mm ausgebildet ist. Hierdurch kann der Rollwiderstand zusätzlich positiv beeinflusst werden.

Besonders vorteilhaft ist die Ausbildung eines Fahrzeugreifens gemäß den Merkmalen von Anspruch 7, wobei die Höhe H₄ mit 1mm ≤ H₄ ≤ 3mm ausgebildet ist. Die Höhe H₄ ist hierdurch ausreichend groß gewählt, um ein sicheres "Schneiden" des Wasserfilmes und eine wirksame Aufnahmekapazität zwischen den Fasen der beiden Rillenwände einfach umzusetzen, und ausreichend klein gewählt, um die Stabilität des im Reifenlatsch geschlossenen Umfangsabschnittes nicht zu beeinträchtigen und somit zur Umsetzung eines besonders guten Rollwiderstandes.

Besonders vorteilhaft ist die Ausbildung eines Fahrzeugreifens gemäß den Merkmalen von Anspruch 8, wobei in den zweiten Umfangsbereichen die Schnittkontur der beiden Rillenwände mit der radial äußeren Oberfläche jeweils drei Seiten und vier Eckpunkte eines gemeinsamen, symmetrischen Achteckes bilden. Hierdurch kann in einfacher Weise eine zur Geräuschreduktion optimierte Kantenausrichtung der in der radial äußeren Oberfläche des zweiten Umfangsabschnitts beim Abrollen auf der Straße wirksamen Kanten umgesetzt und somit eine Geräuschoptimierung ermöglicht werden.

Besonders vorteilhaft ist die Ausbildung eines Fahrzeugreifens gemäß den Merkmalen von Anspruch 9, wobei die Rillenwände im radial inneren Erstreckungsabschnitt in den Querschnittebenen, welche die Reifenachse beinhalten, von radial innen nach radial außen hin unter Einschluss eines Öffnungswinkels β mit 4°≤ β ≤40° v-förmig gespreizt ausgebildet sind. Die Ausbildung ermöglicht es, in einfacher Weise das Einfangen von Steinen zu erschweren und das Auswerfen von eingefangenen Steinen zu erleichtern sowie der Bildung von Spannungsspitzen beim Fahren im Übergang zwischen Rillengrund und Rillenwand und somit Rissbildungen entgegenzuwirken und dabei ein Schließen der Rille im radial äußeren Erstreckungsabschnitt der ersten Umfangserstreckungsbereichen sicher umzusetzen ohne für guten Rollwiderstand unerwünschtes Einbiegen beim Durchlaufen des Reifenlatsches.

Besonders vorteilhaft ist die Ausbildung eines Fahrzeugreifens gemäß den Merkmalen von Anspruch 10, wobei die Rille im radial inneren Erstreckungsabschnitt nach radial innen hin durch einen die Rille begrenzenden Rillengrund der Breite B₅ mit 4mm≤ B₅≤ B₁ begrenzt ist.

Besonders vorteilhaft ist die Ausbildung eines Fahrzeugreifens gemäß den Merkmalen von Anspruch 11, wobei in den zweiten Umfangsbereichen zumindest jeweils in einem mittleren Umfangserstreckungsbereich über die radiale Erstreckung von innerem und radial äußerem Erstreckungsabschnitt hinweg bis zur radial äußeren Oberfläche die Rillenwände in den Querschnittebenen, welche die Reifenachse beinhalten, geradlinig und von radial innen nach radial außen hin unter Einschluss des Öffnungswinkels β mit 4°≤ β ≤40° v-förmig gespreizt und in der radial äußeren Oberfläche mit Abstand B₃ von einander ausgebildet sind. Die Ausbildung ermöglicht es in einfacher Weise das Einfangen von Steinen zu erschweren und das Auswerfen von eingefangenen Steinen zu erleichtern. Darüber hinaus kann der Bildung von Spannungsspitzen beim Fahren im Übergang zwischen Rillengrund und Rillenwand und somit Rissbildungen entgegengewirkt werden.

Die Erfindung wird im Folgenden an Hand der in den Figuren 1 bis 5 dargestellten Ausführungsbeispiele näher erläutert. Hierin zeigen
- Fig.1: einen Umfangserstreckungsabschnitt eines Laufstreifenprofils eines Nutzfahrzeugreifens in Draufsicht,
- Fig.2: einen vergrößerten Ausschnitt des Laufstreifenprofils von Fig.1 in Draufsicht zur Erläuterung der Ausbildung einer Umfangsrille,
- Fig.3: die Umfangsrille von Fig.2 in Schnittdarstellung gemäß Schnitt III-III von Fig.2,
- Fig.4: die Umfangsrille von Fig.2 in Schnittdarstellung gemäß Schnitt IV-IV und
- Fig.5: die Umfangsrille von Fig.2 in Schnittdarstellung gemäß Schnitt V-V von Fig.2.

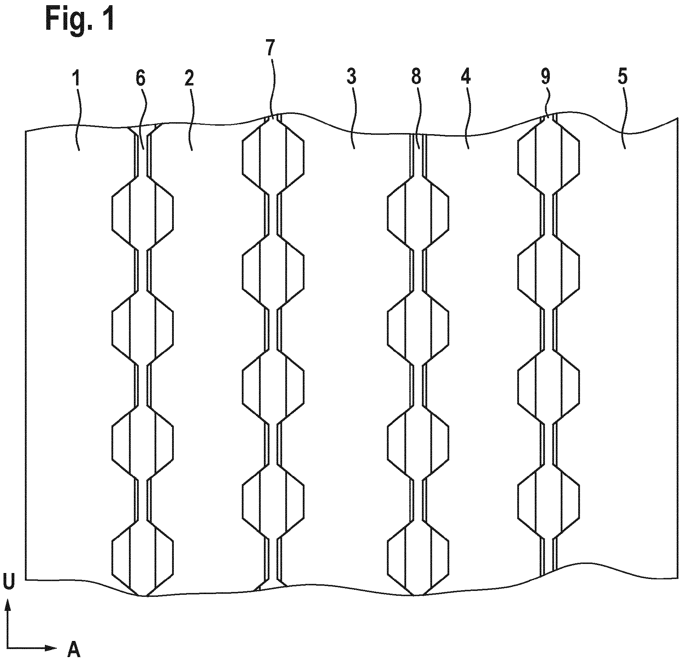

Fig. 1 zeigt ein Laufstreifenprofil eines Fahrzeugluftreifens für Nutzfahrzeuge mit mehreren in axialer Richtung A des Fahrzeugluftreifens nebeneinander angeordneten, über den Umfang des Fahrzeugluftreifens erstreckten und in Umfangsrichtung U ausgerichteten Umfangsrippen 1, 2, 3, 4 und 5.

Axial nebeneinander angeordnete Umfangsrippen sind dabei jeweils durch eine Umfangsrille axial voneinander beabstandet. Die Umfangsrippen 1 und 2 sind dabei in axialer Richtung A durch eine über den gesamten Umfang des Fahrzeugluftreifens erstreckte und in Umfangsrichtung U des Fahrzeugluftreifens ausgerichtete Umfangsrille 6 voneinander getrennt. Die Umfangsrippen 2 und 3 sind in axialer Richtung A durch eine über den gesamten Umfang des Fahrzeugluftreifens erstreckte und in Umfangsrichtung U des Fahrzeugluftreifens ausgerichtete Umfangsrille 7 voneinander getrennt. Die Umfangsrippen 3 und 4 sind in axialer Richtung A durch eine über den gesamten Umfang des Fahrzeugluftreifens erstreckte und in Umfangsrichtung U ausgerichtete Umfangsrille 8 voneinander getrennt. Die Umfangsrippen 4 und 5 sind in axialer Richtung A durch eine über den gesamten Umfang des Fahrzeugluftreifens erstreckte und in Umfangsrichtung U ausgerichtete Umfangsrille 9 voneinander getrennt. Die Umfangsrippen 1 und 5 sind Schulterrippen.

Die Umfangsrippen 1, 2, 3, 4 und 5 sind in radialer Richtung R des Fahrzeugluftreifens nach außen hin durch eine die Straßenkontaktoberfläche bildende, radial äußere Oberfläche 19 begrenzt. Die Umfangsrillen 6, 7, 8 und 9 sind in radialer Richtung R nach innen hin jeweils durch einen über den gesamten Umfang des Fahrzeugluftreifens erstreckten Rillengrund 14 begrenzt. Die Umfangsrippen 1, 2, 3, 4 und 5 sind in axialer Richtung A zur jeweils angrenzenden Umfangsrille hin jeweils durch eine Flanke, welche die jeweils zur Umfangsrippe hin gerichtete Rillenwand der zugehörigen Umfangsrille hin bildet, begrenzt.

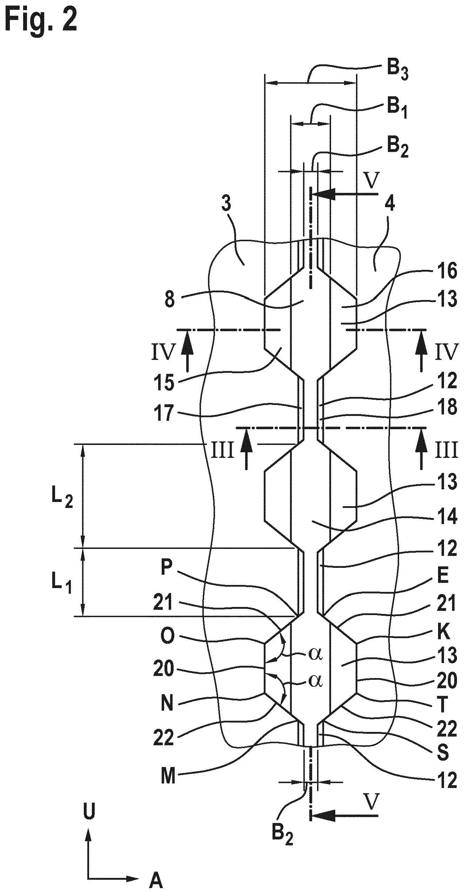

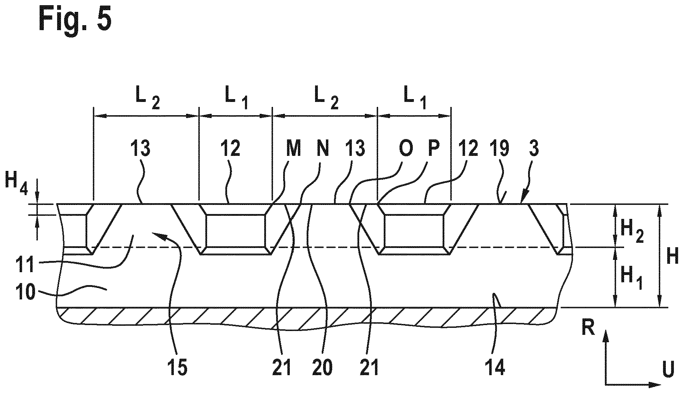

In den Figuren 2 bis 5 ist anhand der Umfangsrille 8 die Ausbildung der Umfangsrillen 6, 7, 8 und 9 näher dargestellt. Dabei ist erkennbar, dass die die Umfangsrille 8 begrenzende Umfangsrippe 3 auf ihrer zur Umfangsrille 8 hin gerichteten Seite von einer Flanke 15 begrenzt ist, welche sich in radialer Richtung R ausgehend vom Rillengrund 14 der Umfangsrille 8 bis zur radial äußeren Oberfläche 19 der Umfangsrippe 3 erstreckt und dabei die zur Umfangsrippe 3 gerichtete Rillenwand der Umfangsrille 8 bildet. Die Umfangsrippe 4 ist auf ihrer in axialer Richtung A zur Umfangsrille 8 hin gerichteten Seite von einer Flanke 16 begrenzt, welche sich in radialer Richtung R ausgehend vom Rillengrund 14 bis zur radial äußeren Oberfläche 19 der Umfangsrippe 4 erstreckt und dabei die zur Umfangsrippe 4 hin gerichtete Rillenwand der Umfangsrille 8 bildet. Die Umfangsrille 8 ist mit einer von der radial äußeren Oberfläche 19 der angrenzenden Umfangsrippen 3 und 4 ausgehend in radialer Richtung R nach innen hin bis zum Rillengrund 14 gemessenen Rillentiefe H ausgebildet. Die Umfangsrille 8 ist in ihrem Rillengrund 14 mit einer in axialer Richtung A des Fahrzeugluftreifens gemessenen Breite B₅ ausgebildet.

Die Umfangsrille 8 ist in radialer Richtung R aus einem radial inneren Erstreckungsabschnitt 10 und einem radial äußeren Erstreckungsabschnitt 11 ausgebildet. Der radial innere Erstreckungsabschnitt 10 erstreckt sich vom Rillengrund 14 ausgehend in radialer Richtung R nach außen hin bis in eine in radialer Richtung R vom Rillengrund 14 nach radial außen gemessene Erstreckungshöhe H₁. Im Anschluss an den radial inneren Erstreckungsabschnitt 10 erstreckt sich der radial äußere Erstreckungsabschnitt 11 mit einer in radialer Richtung R gemessenen Erstreckungshöhe H₂ bis zur radial äußeren Oberfläche 19. Im radial inneren Erstreckungsabschnitt 10 ist die Umfangsrille 8 über den Umfang des Fahrzeugluftreifens hinweg als ein in Umfangsrichtung U ausgerichteter und über den Umfang des Reifens erstreckter Durchflusskanal 10 der Erstreckungshöhe H₁ und der Kanalbreite B₁ ausgebildet.

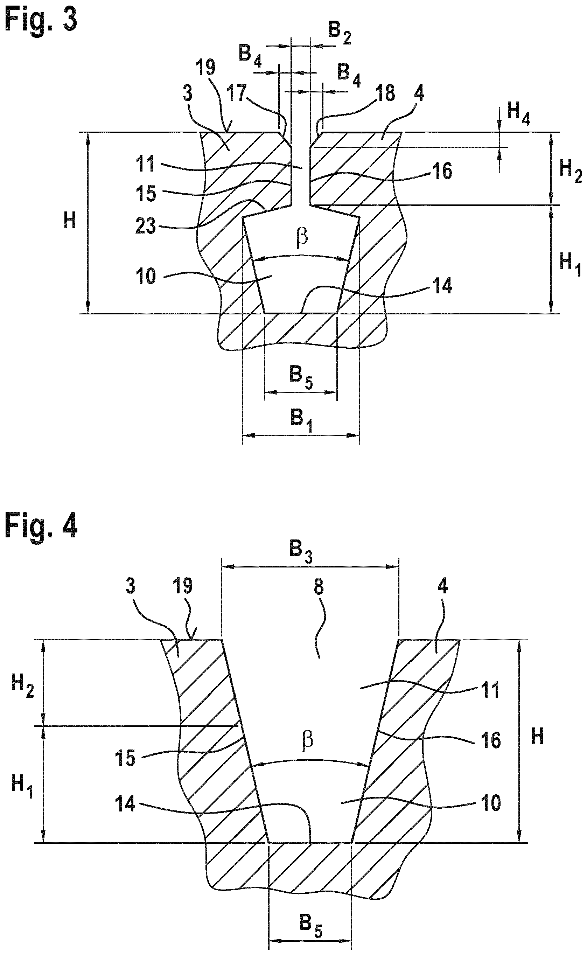

Die Rillenwände 15 und 16 im radial inneren Erstreckungsabschnitt 11 in den Querschnittebenen des Reifens, welche die Reifenachse beinhalten, - wie in den Figuren 3 und 4 dargestellt ist - jeweils längs ihrer radialen Erstreckung von innen nach außen hin jeweils in axialer Richtung A zu der der jeweiligen Rillenwand 15 bzw. 16 zuzuordnenden Umfangsrippe 3 bzw. 4 hin geneigt ausgebildet. Dabei schließen die Rillenwände 15 und 16 miteinander einen Öffnungswinkel β ein mit 4°≤ β ≤ 40°, beispielsweise mit β = 5°.

Die Rillenwände 15 und 16 sind im radial inneren Erstreckungsabschnitt 11 über den gesamten Umfang des Reifens hin gesehen in allen Querschnittsebenen, welche die Reifenachse beinhalten, jeweils unter Einschluss des Neigungswinkels β vom Rillengrund 14 ausgehend in radialer Richtung R nach außen hin mit kontinuierlich zunehmendem Abstand voneinander ausgebildet und erreichen im Bereich des radialen Erstreckungsendes des radial inneren Erstreckungsabschnitts 10 ihren maximalen in axialer Richtung A gemessenen Abstand B₁.

Im radial äußeren Erstreckungsabschnitt 11 ist die Umfangsrille 8 längs ihrer Erstreckung in Umfangsrichtung U über den Umfang des Reifens hinweg aus in alternierender Abfolge hintereinander angeordneten Umfangserstreckungsbereichen 12 mit schmaler Rillenbreite und Umfangserstreckungsbereichen 13 mit großer Rillenbreite ausgebildet. In den Umfangserstreckungsbereichen 12 ist die Umfangsrille 8 im radial äußeren Erstreckungsabschnitt 11 längs ihrer Erstreckung in Umfangsrichtung U und längs ihrer radialen Erstreckung R ausgehend vom Übergang vom radial inneren Erstreckungsabschnitt 10 zum radial äußeren Erstreckungsabschnitt 11 in radialer Richtung zur radial äußerer Oberfläche 19 hin mit einer konstanten Rillenbreite B₂ ausgebildet mit B₂ < B₁.

Im Übergang zur radial äußeren Oberfläche 19 der Umfangsrippe 3 ist die Flanke 15 im gesamten Umfangserstreckungsbereich 12 mit einer Fase 17 ausgebildet. Ebenso ist im Übergang zur radial äußeren Oberfläche 19 der Umfangsrippe 4 die Flanke 16 im im gesamten Umfangserstreckungsbereich 12 als Fase 18 ausgebildet. Die Fasen 17 und 18 erstrecken sich dabei in radialer Richtung R über eine Erstreckungshöhe H₄.

Wie in Fig. 3 zu erkennen ist, erstreckt sich die Flanke 15 in den Querschnittebenen, welche die Reifenachse beinhalten, im radial inneren Erstreckungsabschnitt 10 ausgehend von der radialen Position der größten Breite B₁ in einem Erstreckungsabschnitt in axialer Richtung A nach innen hin in Richtung zur anderen Flanke 16 hin. Ebenso erstreckt sich die Flanke 16 ausgehend von der radialen Position der Breite B₁ in einem Erstreckungsabschnitt in axialer Richtung A nach innen hin in Richtung zur anderen Flanke 15 hin. Die Flanken 15 und 16 bilden im Erstreckungsabschnitt 23 jeweils einen axialen Versatz der Flanke 15 bzw. 16 nach axial innen. Sie bilden dabei mit ihrem Versatz jeweils eine nach radial außen hin gerichtete Abschlussfläche 23 des radial inneren Erstreckungsabschnitts H₁ und des Durchflusskanals. Wie in Fig. 3 dargestellt ist, ist diese Abschlussfläche 23 produktionsbedingt längs ihrer Erstreckung in axialer Richtung A unter geringfügiger radialer Steigung geneigt ausgebildet. Die Flanken 15 und 16 erstrecken sich unter Bildung der Abschlussflächen 23 dabei bis in einen Abstand B₂ voneinander in axialer Richtung A auf einander zu, den sie in einer Position in radialem Abstand H₂ von der radial äußeren Oberfläche 19 einnehmen. Von dieser Position an erstrecken sich die Flanken 15 und 16 im Abstand B₂ voneinander nach radial außen und bilden den radial äußeren Erstreckungsabschnitt 11 der Erstreckungshöhe H₂.

In den Umfangserstreckungsabschnitten 14 ist die Umfangsrille 8 - wie in Fig.4 dargestellt - auch im radial äußeren Erstreckungsabschnitt 11 der Erstreckungshöhe H₂ mit einer längs ihrer radialen Erstreckung von innen nach außen hin zunehmenden Breite ausgebildet und erreicht ihre maximale Breite B₃ in der Position der radial äußeren Oberfläche 19 der Umfangsrippen 3 und 4 mit B₃ > B₁. B₃ ist dabei mit B₃ ≤ 17mm gewählt ausgebildet. Die Umfangsrille 8 ist dabei in ihrem wesentlichen Umfangserstreckungsabschnitt des Umfangserstreckungsbereichs 13 - wie in Fig. 4 dargestellt ist - ausgehend vom Rillengrund 14 über den radial inneren Erstreckungsabschnitt H₁ und den anschließenden radial äußeren Erstreckungsabschnitt H₂ hinweg und somit über die gesamte Rillentiefe H hinweg mit einer in den Querschnittsebenen, welche die Reifenachse beinhalten, geradlinig erstreckten Schnittkontur der Flanke 15 und mit einer geradlinig erstreckten Schnittkontur der Flanke 16 und somit unter Einschluss des Öffnungswinkels β ausgebildet.

Wie in Fig. 2 dargestellt ist, schneidet die Flanke 15 die radial äußere Oberfläche 19 der Umfangsrippe 3 dabei in einer Schnittkontur, welche über den wesentlichen, mittleren Erstreckungsbereich 20 des Umfangserstreckungsabschnitts 13 in Umfangsrichtung U des Fahrzeugluftreifens ausgerichtet ist. Die Schnittkontur des Umfangserstreckungsabschnitts 14 mit der radial äußeren Oberfläche 19 der Umfangsrippe 3 ist aus diesem mittleren Erstreckungsabschnitt 20, einem in Umfangsrichtung U diesem mittleren Erstreckungsabschnitt 20 unmittelbar vorgeordneten Übergangserstreckungsabschnitt 22 und einem in Umfangsrichtung U diesem mittleren Erstreckungsabschnitt 20 unmittelbar nachgeordneten Übergangserstreckungsabschnitt 21 ausgebildet. Der Übergangserstreckungsabschnitt 21 verbindet dabei die Schnittkontur der Flanke 15 mit der radial äußeren Oberfläche 19 des wesentlichen, mittleren Erstreckungsbereichs 20 mit der Schnittkontur der Flanke 15 mit der radial äußeren Oberfläche 19 des in Umfangsrichtung U unmittelbar nachgeordneten Umfangserstreckungsbereichs 12. Der Übergangserstreckungsabschnitt 22 verbindet dabei die Schnittkontur der Flanke 15 mit der radial äußeren Oberfläche 19 des wesentlichen, mittleren Erstreckungsbereichs 20 mit der Schnittkontur der Flanke 15 mit der radial äußeren Oberfläche 19 des in Umfangsrichtung U unmittelbar vorgeordneten Umfangserstreckungsbereichs 12.

In der radial äußeren Oberfläche erstreckt sich die Schnittkontur im mittleren Erstreckungsabschnitt 20 - wie in Fig.2 dargestellt - zwischen zwei Punkten N und O. Im Punkt O schließt sich die Schnittkontur des Erstreckungsabschnitts 21 an, welche sich bis zu einem Punkt P erstreckt. Im Punkt P schließt sich der Schnittkonturlinienverlauf des nachgeordneten Umfangserstreckungsabschnittes 12 an. Im Punkt N schließt sich an die Schnittkontur des Erstreckungsabschnitts 20 die Schnittkontur des Erstreckungsabschnitts 22 an, welche sich bis zu einem Punkt M erstreckt. Im Punkt M schließt sich der Schnittkonturlinienverlauf des vorgeordneten Umfangserstreckungsabschnitts 12 an.

In analoger Weise schneidet die Flanke 16 die radial äußere Oberfläche 19 der Umfangsrippe 4 dabei in einer Schnittkontur, welche über den wesentlichen, mittleren Erstreckungsbereich 20 des Umfangserstreckungsabschnitts 13 in Umfangsrichtung U des Fahrzeugluftreifens ausgerichtet ist. Die Schnittkontur des Umfangserstreckungsabschnitts 14 mit der radial äußeren Oberfläche 19 der Umfangsrippe 4 ist aus diesem mittleren Erstreckungsabschnitt 20, einem in Umfangsrichtung U diesem mittleren Erstreckungsabschnitt 20 unmittelbar vorgeordneten Übergangserstreckungsabschnitt 22 und einem in Umfangsrichtung U diesem mittleren Erstreckungsabschnitt 20 unmittelbar nachgeordneten Übergangserstreckungsabschnitt 21 ausgebildet. Der Übergangserstreckungsabschnitt 21 verbindet dabei die Schnittkontur der Flanke 16 mit der radial äußeren Oberfläche 19 des wesentlichen, mittleren Erstreckungsbereichs 20 mit der Schnittkontur der Flanke 16 mit der radial äußeren Oberfläche 19 des in Umfangsrichtung U unmittelbar nachgeordneten Umfangserstreckungsbereichs 12. Der Übergangserstreckungsabschnitt 22 verbindet dabei die Schnittkontur der Flanke 16 mit der radial äußeren Oberfläche 19 des wesentlichen, mittleren Erstreckungsbereichs 20 mit der Schnittkontur der Flanke 16 mit der radial äußeren Oberfläche 19 des in Umfangsrichtung U unmittelbar vorgeordneten Umfangserstreckungsbereichs 12.

In der radial äußeren Oberfläche erstreckt sich die Schnittkontur im mittleren Erstreckungsabschnitt 20 - wie in Fig.2 dargestellt - zwischen zwei Punkten T und K. Im Punkt K schließt sich die Schnittkontur des Erstreckungsabschnitts 21 an, welche sich bis zu einem Punkt E erstreckt. Im Punkt E schließt sich der Schnittkonturlinienverlauf des nachgeordneten Umfangserstreckungsabschnittes 12 an. Im Punkt T schließt sich an die Schnittkontur des Erstreckungsabschnitts 20 die Schnittkontur des Erstreckungsabschnitts 22 an, welche sich bis zu einem Punkt S erstreckt. Im Punkt S schließt sich der Schnittkonturlinienverlauf des vorgeordneten Umfangserstreckungsabschnitts 12 an.

Die Punkte M,N,O,P,E,K,T und S bilden in der radial äußeren Oberfläche 19 Punkte eines Achteckes, welches zur in der radial äußeren Oberfläche 19 in Umfangsrichtung U gebildeten Mittellinie der Umfangsrille 8 symmetrisch ausgebildet ist. Die Schnittkontur des mittleren Erstreckungsabschnitts 20 der Flanke 15 mit der radial äußeren Oberfläche 19 bildet dabei die Seite NO des Achtecks. Die Schnittkontur des Erstreckungsabschnitts 21 der Flanke 15 mit der radial äußeren Oberfläche 19 bildet die Seite OP des Achtecks. Die Schnittkontur des Erstreckungsabschnitts 22 der Flanke 15 mit der radial äußeren Oberfläche 19 bildet die Seite NM des Achtecks. Der Schnittkontur des Erstreckungsabschnitts 20 der Flanke 16 mit der radial äußeren Oberfläche 19 bildet die Seite TK des Achtecks. Die Schnittkontur des Erstreckungsabschnitts 21 der Flanke 16 mit der radial äußeren Oberfläche 19 bildet die Seite KE des Achtecks. Die Schnittkontur des Erstreckungsabschnitts 22 der Flanke 16 mit der radial äußeren Oberfläche 19 bildet die Seite ST des Achtecks. Durch die Umfangsrille 8 hinweg bildet die Verbindungsstrecke der Punkte P und E die Seite PE des Achtecks und die Verbindungsstrecke der Punkte M und S die Seite MS des Achtecks.

In der radial äußeren Oberfläche 19 schließen die Seiten OP und ON einen Innenwinkel α ein. Ebenso schließen in der radial äußeren Oberfläche 19 die Seiten ON und NM einen Innenwinkel α ein. Ebenso schließen in der radial äußeren Oberfläche 19 die Seite KE und die Seite KT einen Innenwinkel α ein. Ebenso schließen die Seiten KT und TS einen Innenwinkel α ein. Der Winkel α ist dabei mit 100° ≤ α ≤ 140° ausgebildet.

In dem dargestellten Ausführungsbeispiel sind die Seiten NO, OP und MN jeweils mit gleicher Erstreckungslänge gewählt ausgebildet. Ebenso sind die Seiten TK, KE und TS jeweils mit gleicher Erstreckungslänge gewählt ausgebildet.

Längs der Erstreckung der Seiten NO und TK und somit über wenigstens die Hälfte der Erstreckungslänge L₂ erstreckt sich die Flanke 15 und 16 somit jeweils - wie in Fig.4 dargestellt ist - mit einer in den Querschnittebenen, welche die radiale Reifenachse beinhalten, ausgehend vom Rillengrund 14 bis zur radial äußeren Oberfläche 19 geradlinigen Schnittlinienkontur. Längs der Umfangserstreckungsabschnitte der Seiten OP bzw. MN bzw. EK bzw. TS erstrecken sich die Flanken 15 und 16 in den Querschnittebenen, welche die radiale Reifenachse beinhalten, ausgehend vom Rillengrund 14 durch den gesamten radial inneren Erstreckungsabschnitt 10 der Höhe H₁ geradlinig verlängert bis in den radial äußeren Erstreckungsabschnitt 11 hinein und gehen dann unter Einschluss eines Knicks in einen radial erstreckten, geradlinigen Erstreckungsabschnitt über.

Die Breite B₁ ist mit 5mm≤ B₁ ≤ 10mm, beispielsweise mit B₁ = 7mm ausgebildet.

Die Breite B₂ ist 2,5mm ≤ B₂ ≤ 3mm, beispielsweise mit B₂ = 3mm ausgebildet. Die Breite B₅ des Rillengrundes 14 ist mit 4mm ≤ B₅ ≤ B₁ ausgebildet. Beispielsweise ist B₅ = 4mm ausgebildet.

Die Höhe H ist mit 8mm ≤ H ≤ 18mm ausgebildet. Die Höhe H₁ ist mit (1/3)H ≤ H₁ ≤ (2/3)H ausgebildet. Die Höhe H₂ ist mit (1/3)H≤H₂ ≤ (2/3)H ausgebildet.

Die Höhe H₄ ist mit 1mm ≤ H₄ ≤ 3mm ausgebildet.

Beispielsweise ist H = 12 mm, H₁ = 6mm, H₂ = 6mm und H₄ = 2mm gewählt ausgebildet.

Die Umfangserstreckungsbereiche 12 sind jeweils in Umfangsrichtung U gesehen in der radial äußeren Oberfläche mit einer Erstreckungslänge L₁ und die Umfangserstreckungsbereiche 13 mit einer Erstreckungslänge L₂ ausgebildet mit L₁ ≤ L₂ ≤ 2L₁. Beispielsweise ist L₂ = 1,5 L₁ gewählt.

L₁ ist mit 10mm ≤ L₁ ≤ 50mm ausgebildet.

Im radial inneren Erstreckungsabschnitt 10 ist die Umfangsrille 8 als über den gesamten Umfang des Reifens erstreckter Kanal ausgebildet, welche in den Umfangserstreckungsabschnitten 12 nach radial innen hin durch den Rillengrund 14 und nach radial außen hin durch die Rillenflanken gebildeten Abdeckflächen 23 und in axialer Richtung A durch die beiden zwischen Rillengrund 14 und Abdeckflächen 23 V-förmig sich öffnenden Abschnitte der Flanken 15 und 16 begrenzt ist. In den Umfangserstreckungsbereichen 13 ist der im radial inneren Erstreckungsabschnitt gebildete Kanal radial innen durch den Rillengrund 14, in axialer Richtung A durch die beiden V-förmig gespreizten Flanken 15 und 16 begrenzt und nach radial außen hin offen.

Wie in Fig. 1 dargestellt ist, sind die Umfangsrillen 6, 7 und 9 analog zur Umfangsrille 8 ausgebildet.

Die Fig. 1 zeigt dabei ein weiteres Ausführungsbeispiel, bei welcher in den Umfangsrillen 7 und 9 die Umfangsposition der Erstreckungsabschnitte 13 zwischen der Umfangspositionen der Erstreckungsabschnitte 13 der Umfangsrille 8 positioniert sind.

### Bezugszeichenliste

### (Teil der Beschreibung)

- 1: Umfangsrippe
- 2: Umfangsrippe
- 3: Umfangsrippe
- 4: Umfangsrippe
- 5: Umfangsrippe
- 6: Umfangsrille
- 7: Umfangsrille
- 8: Umfangsrille
- 9: Umfangsrille
- 10: Radial innerer Erstreckungsabschnitt
- 11: Radial äußerer Erstreckungsabschnitt
- 12: Schmaler Umfangsbereich
- 13: Breiter Umfangsbereich
- 14: Rillengrund
- 15: Flanke
- 16: Flanke
- 17: Fase
- 18: Fase
- 19: Radial äußere Oberfläche
- 20: Mittlerer Umfangserstreckungsabschnitt
- 21: Übergangserstreckungsabschnitt
- 22: Übergangserstreckungsabschnitt
- 23: Abschlussfläche

## Patentansprüche

1. Fahrzeugluftreifen für Nutzfahrzeuge mit einem profilierten Laufstreifen mit wenigstens zwei in axialer Richtung A benachbarten Umfangsrippen (3,4), welche durch eine Umfangsrille (8) der in radialer Richtung R gemessenen Tiefe H getrennt sind, bei dem die Umfangsrille (8) in axialer Richtung A durch zwei Rillenwände begrenzt wird, bei dem die Umfangsrippen (3,4) in radialer Richtung R nach außen durch eine die Straßenkontaktfläche bildende radial äußere Oberfläche (19) und in axialer Richtung A zur Umfangsrille (8) hin jeweils durch eine Flanke (15,16), welche die eine zur Umfangsrippe (3,4) gerichtete Rillenwand der Umfangsrille (8) bildet, begrenzt werden und bei dem die Umfangsrille (8) aus einem radial inneren Erstreckungsabschnitt (10) der in radialer Richtung gemessenen Höhe H₁ und einem radial daran anschließenden radial äußeren Erstreckungsabschnitt (11) der Höhe H₂ ausgebildet ist, wobei die Umfangsrille (8) im radial inneren Erstreckungsabschnitt (10) als über den gesamten Umfang des Reifens erstreckter Kanal der Höhe H₁ und der in axialer Richtung A gemessenen Breite B₁ ausgebildet ist, wobei die Umfangsrille (8) im radial äußeren Erstreckungsabschnitt (11) längs ihrer Erstreckung in Umfangsrichtung U über den Umfang hinweg mit in alternierender Abfolge angeordneten ersten Umfangsbereichen (12) und zweiten Umfangsbereichen (13) ausgebildet ist, wobei der radial äußere Erstreckungsabschnitt (11) der Umfangsrille (8) in den zweiten Umfangsbereichen (13) mit einer maximalen Breite B₃ mit B₃≥ B₁ und in den ersten Umfangsbereichen (12) längs ihrer Erstreckung in Umfangsrichtung U mit einer Breite B₂ mit B₂ < B₁ ausgebildet ist,
**dadurch gekennzeichnet,**
**dass** die beiden die Rillenwände bildenden Flanken (15,16) in den ersten Umfangsbereichen (12) im Übergang zur radial äußeren Oberfläche (19) zur Umfangsrippe (3,4) jeweils mit einer Fase (17,18) der in radialer Richtung R gemessenen Höhe H₄ mit H₄< H₂ und längs ihrer radialen Erstreckung im radial äußeren Erstreckungsabschnitt (11) von radial innen nach radial außen bis zur Fase (17,18) im Abstand B₂ von einander ausgebildet sind.

2. Fahrzeugluftreifen gemäß den Merkmalen von Anspruch 1,
wobei die Breite B₂ mit 2,5mm ≤ B₂ ≤ 3mm ausgebildet ist.

3. Fahrzeugluftreifen gemäß den Merkmalen von Anspruch 1 oder 2,
wobei die Breite B₁ mit 5mm ≤ B₁ ≤ 10mm und die Höhe H₁ mit (1/3)H ≤ H₁ ≤ (2/3)H ausgebildet ist.

4. Fahrzeugluftreifen gemäß den Merkmalen von einem oder mehreren der vorangegangenen Ansprüche,
wobei die Breite B₃ mit B₃ ≤ 17mm ausgebildet ist.

5. Fahrzeugluftreifen gemäß den Merkmalen von einem oder mehreren der vorangegangenen Ansprüche,
wobei die Höhe H₂ mit (1/3)H ≤ H₂ ≤ (2/3)H ausgebildet ist.

6. Fahrzeugluftreifen gemäß den Merkmalen von einem oder mehreren der vorangegangenen Ansprüche,
wobei die Höhe H mit 8mm ≤ H₁ ≤ 18mm ausgebildet ist.

7. Fahrzeugluftreifen gemäß den Merkmalen von einem oder mehreren der vorangegangenen Ansprüche,
wobei die Höhe H₄ mit 1mm ≤ H₄ ≤ 3mm ausgebildet ist.

8. Fahrzeugluftreifen gemäß den Merkmalen von einem oder mehreren der vorangegangenen Ansprüche,
wobei in den zweiten Umfangsbereichen (13) die Schnittkontur der beiden Rillenwände mit der radial äußeren Oberfläche (19) jeweils drei Seiten (MN,NO,OP, ST,TK,KE) und vier Eckpunkte (M,N,O,P,S,T,K,E) eines gemeinsamen, symmetrischen Achteckes bilden.

9. Fahrzeugluftreifen gemäß den Merkmalen von einem oder mehreren der vorangegangenen Ansprüche,
wobei die Rillenwände im radial inneren Erstreckungsabschnitt (10) in den Querschnittebenen, welche die Reifenachse beinhalten, geradlinig und von radial innen nach radial außen hin unter Einschluss eines Öffnungswinkels β mit 4°≤ β ≤40° v-förmig gespreizt ausgebildet sind.

10. Fahrzeugluftreifen gemäß den Merkmalen von Anspruch 9,
wobei die Rille (8) im radial inneren Erstreckungsabschnitt (10) nach radial innen hin durch einen die Rille begrenzenden Rillengrund (14) der Breite B₅ mit 4mm≤ B₅≤ B₁ begrenzt ist.

11. Fahrzeugluftreifen gemäß den Merkmalen von Anspruch 9 oder 10,
wobei in den zweiten Umfangsbereichen (13) zumindest jeweils in einem mittleren Umfangserstreckungsbereich (20) über die radiale Erstreckung von innerem (10) und radial äußerem Erstreckungsabschnitt (11) hinweg bis zur radial äußeren Oberfläche (19) die Rillenwände in den Querschnittebenen, welche die Reifenachse beinhalten, geradlinig und von radial innen nach radial außen hin unter Einschluss des Öffnungswinkels β mit 4°≤ β ≤40° v-förmig gespreizt und in der radial äußeren Oberfläche (19) mit Abstand B₃ von einander ausgebildet sind.

## Claims

1. Pneumatic vehicle tire for utility vehicles having a profiled tread comprising at least two circumferential ribs (3, 4) that are adjacent in the axial direction A and are separated by a circumferential groove (8) of depth H measured in the radial direction R, wherein the circumferential groove (8) is delimited in the axial direction A by two groove walls, wherein the circumferential ribs (3, 4) are outwardly delimited in the radial direction R by a radially outer surface (19) forming the road contact surface, and in the axial direction A toward the circumferential groove (8) by a respective flank (15, 16) that forms a groove wall of the circumferential groove (8) oriented toward the circumferential rib (3, 4), and wherein the circumferential groove (8) is formed from a radially inner extension section (10) of height H₁ measured in the radial direction and, adjoining the latter radially, a radially outer extension section (11) of height H₂, wherein the circumferential groove (8) in the radially inner extension section (10) is configured as a channel of height H₁ and breadth B₁ measured in the axial direction A and extending over the entire circumference of the tire, wherein the radially outer extension section (11) of the circumferential groove (8) is designed, along its extent in the circumferential direction U, with an alternating sequence of first circumferential regions (12) and second circumferential regions (13) over the circumference, wherein the radially outer extension section (11) of the circumferential groove (8) is designed with a maximum breadth B₃ in the second circumferential regions (13) such that B₃ ≥ B₁ and with a breadth B₂ in the first circumferential regions (12) along its extent in the circumferential direction U such that B₂ < B₁,
**characterized**
**in that** the two flanks (15, 16) in the first circumferential regions (12), which form the groove walls, are designed, in the transition to the radially outer surface (19) of the circumferential rib (3, 4),
with in each case a chamfer (17, 18) of height H₄ measured in the radial direction R such that H₄ < H₂, and are spaced apart from one another by a distance B₂ along their radial extent in the radially outer extension section (11) from radially inner to radially outer as far as the chamfer (17, 18).

2. Pneumatic vehicle tire as per the features of Claim 1,
wherein the breadth B₂ is configured such that 2.5mm ≤ B₂ ≤ 3mm.

3. Pneumatic vehicle tire as per the features of Claim 1 or 2,
wherein the breadth B₁ is configured such that 5mm ≤ B₁ ≤ 10mm and the height H₁ is configured such that (1/3)H ≤ H₁ ≤ (2/3)H.

4. Pneumatic vehicle tire as per the features of one or more of the preceding claims,
wherein the breadth B₃ is configured such that B₃ ≤ 17mm.

5. Pneumatic vehicle tire as per the features of one or more of the preceding claims,
wherein the height H₂ is configured such that (1/3)H ≤ H₂ ≤ (2/3)H.

6. Pneumatic vehicle tire as per the features of one or more of the preceding claims,
wherein the height H is configured such that 8mm ≤ H₁ ≤ 18mm.

7. Pneumatic vehicle tire as per the features of one or more of the preceding claims,
wherein the height H₄ is configured such that 1mm ≤ H₄ ≤ 3mm.

8. Pneumatic vehicle tire as per the features of one or more of the preceding claims,
wherein, in the second circumferential regions (13), the intersection contour of the two groove walls and the radially outer surface (19) together respectively form three sides (MN, NO, OP, ST, TK, KE) and four vertices (M, N, O, P, S, T, K, E) of a shared, symmetric octagon.

9. Pneumatic vehicle tire as per the features of one or more of the preceding claims,
wherein, in the radially inner extension section (10) in the cross-sectional planes containing the tire axis, the groove walls are designed to be straight and to be spread apart in a V shape from radially inner to radially outer, enclosing an opening angle β such that 4° ≤ β ≤40°.

10. Pneumatic vehicle tire as per the features of Claim 9,
wherein, in the radially inner extension section (10), the groove (8) is bounded radially inwardly by a groove bottom (14) which bounds the groove and has breadth B₅ such that 4mm≤ B₅≤ B₁.

11. Pneumatic vehicle tire as per the features of Claim 9 or 10,
wherein, in the second circumferential regions (13), at least in each case in a central circumferential extension region (20) over the radial extent from the inner (10) and radially outer extension section (11) and as far as the radially outer surface (19), and in the cross-sectional planes containing the tire axis, the groove walls are designed to be straight and to be spread apart in a V shape from radially inner to radially outer, enclosing an opening angle β such that 4°≤ β ≤40°, and to be at a distance B₃ from one another at the radially outer surface (19).

## Revendications

1. Pneumatique de véhicule pour véhicules utilitaires, comprenant une bande de roulement profilée avec au moins deux nervures périphériques (3, 4) adjacentes dans la direction axiale A, qui sont séparées par une rainure périphérique (8) de profondeur H mesurée dans la direction radiale R, dans lequel la rainure périphérique (8) est limitée dans la direction axiale A par deux parois de rainure, dans lequel les nervures périphériques (3, 4) sont limitées dans la direction radiale R vers l'extérieur par une surface radialement extérieure (19) formant la surface de contact avec la route et dans la direction axiale A vers la rainure périphérique (8) à chaque fois par un flanc (15, 16) qui forme la paroi de rainure de la rainure périphérique (8) orientée vers la nervure périphérique (3, 4), et dans lequel la rainure périphérique (8) est réalisée à partir d'une portion d'étendue radialement intérieure (10) de hauteur H₁ mesurée dans la direction radiale et à partir d'une portion d'étendue radialement extérieure (11) se raccordant radialement à celle-ci, de hauteur H₂, la rainure périphérique (8) étant réalisée dans la portion d'étendue radialement intérieure (10) sous forme de canal de hauteur H₁ s'étendant sur toute la périphérie du pneu et de largeur B₁ mesurée dans la direction axiale A, la rainure périphérique (8) étant réalisée dans la portion d'étendue radialement extérieure (11) le long de son étendue dans la direction périphérique U au-delà de la périphérie avec des premières régions périphériques (12) et des deuxièmes régions périphériques (13) disposées en séquence alternée, la portion d'étendue radialement extérieure (11) de la rainure périphérique (8) étant réalisée dans les deuxièmes régions périphériques (13) avec une largeur maximale B₃ avec B₃ ≥ B₁ et dans les premières régions périphériques (12) le long de son étendue dans la direction périphérique U avec une largeur B₂ avec B₂ < B₁,
**caractérisé en ce que**
les deux flancs (15, 16) formant les parois de rainure dans les premières régions périphériques (12) dans la transition à la surface radialement extérieure (19) vers la nervure périphérique (3, 4) sont réalisés à chaque fois avec un biseau (17, 18) de hauteur H₄ mesurée dans la direction radiale R avec H₄ < H₂ et le long de leur étendue radiale dans la portion d'étendue radialement extérieure (11), radialement de l'intérieur vers l'extérieur jusqu'au biseau (17, 18), à une distance B₂ l'un de l'autre.

2. Pneumatique de véhicule selon les caractéristiques de la revendication 1,
dans lequel la largeur B₂ est telle que l'on ait 2,5 mm ≤ B₂ ≤ 3 mm.

3. Pneumatique de véhicule selon les caractéristiques de la revendication 1 ou 2,
dans lequel la largeur B₁ est telle que l'on ait 5 mm ≤ B₁ ≤ 10 mm, et la hauteur H₁ est telle que l'on ait (1/3)H ≤ H₁ ≤ (2/3)H.

4. Pneumatique de véhicule selon les caractéristiques d'une ou plusieurs des revendications précédentes, dans lequel la largeur B₃ est telle que l'on ait B₃ ≤ 17 mm.

5. Pneumatique de véhicule selon les caractéristiques d'une ou plusieurs des revendications précédentes, dans lequel la hauteur H₂ est telle que l'on ait (1/3)H ≤ H₂ ≤ (2/3)H.

6. Pneumatique de véhicule selon les caractéristiques d'une ou plusieurs des revendications précédentes, dans lequel la hauteur H est telle que l'on ait 8 mm ≤ H₁ ≤ 18 mm.

7. Pneumatique de véhicule selon les caractéristiques d'une ou plusieurs des revendications précédentes, dans lequel la hauteur H₄ est telle que l'on ait 1 mm ≤ H₄ ≤ 3 mm.

8. Pneumatique de véhicule selon les caractéristiques d'une ou plusieurs des revendications précédentes, dans lequel, dans les deuxièmes régions périphériques (13), le contour en coupe des deux parois de rainure forme avec la surface radialement extérieure (19) à chaque fois trois côtés (MN, NO, OP, ST, TK, KE) et quatre coins (M, N, O, P, S, T, K, E) d'un octogone commun symétrique.

9. Pneumatique de véhicule selon les caractéristiques d'une ou plusieurs des revendications précédentes, dans lequel les parois de rainure dans la portion d'étendue radialement intérieure (10) dans les plans en section transversale qui contiennent l'axe du pneu, sont réalisées de manière écartée en forme de V sous forme rectiligne et radialement de l'intérieur vers l'extérieur en incluant un angle d'ouverture β tel que 4° ≤ β ≤ 40°.

10. Pneumatique de véhicule selon les caractéristiques de la revendication 9,
dans lequel la rainure (8) dans la portion d'étendue radialement intérieure (10) est limitée radialement vers l'intérieur par un fond de rainure (14) limitant la rainure, de largeur B₅,
avec 4 mm ≤ B₅ ≤ B₁.

11. Pneumatique de véhicule selon les caractéristiques de la revendication 9 ou 10,
dans lequel, dans les deuxièmes régions périphériques (13), au moins à chaque fois dans une région d'étendue périphérique centrale (20) au-delà de l'étendue radiale de la portion d'étendue intérieure (10) et de la portion d'étendue radialement extérieure (11) jusqu'à la surface radialement extérieure (19), les parois de rainure sont réalisées de manière écartée en forme de V dans les plans en section transversale qui contiennent l'axe du pneu, de manière rectiligne et radialement de l'intérieur vers l'extérieur en formant l'angle d'ouverture β tel que 4° ≤ β ≤ 40° et dans la surface radialement extérieure (19) à une distance B₃ l'une de l'autre.
